# FASCICULE DE BREVET EUROPEEN

(11) **EP 2 126 217 B1**
(45) Date de publication et mention de la délivrance du brevet: **21.08.2013**
(21) Numéro de dépôt: 07731057.1
(22) Date de dépôt: 27.02.2007
(51) Int. Cl.: E01D 15/22, B60F 3/00

(54) **VEHICULE AMPHIBIE POUR FRANCHIR UNE BRECHE HUMIDE**
AMPHIBIENFAHRZEUG ZUM ÜBERQUEREN EINER WASSERGEFÜLLTEN KLUFT
AMPHIBIOUS VEHICLE FOR BREACHING A WATER-FILLED OPENING

(43) Date de publication de la demande: 02.12.2009
(73) Titulaire: Constructions Industrielles de la Méditerranée - CNIM, 75008 Paris (FR)
(72) Inventeur: RICHEUX, Elisabeth, 13600 La Ciotat (FR); AUBERT, Henri, 83110 Sanary (FR)
(74) Mandataire: Thinat, Michel
(86) Numéro de dépôt international: PCT/FR2007/000355
(87) Numéro de publication internationale: WO 2008/104644

(56) Documents cités:
- EP-A- 1 332 896
- DE-A1- 3 204 473
- DE-A1- 3 342 090
- FR-A- 2 049 125
- FR-A- 2 383 035
- US-A- 3 628 490

## Description

La présente invention concerne un véhicule amphibie pour former un pont flottant ou un bac permettant de franchir une brèche humide.

Le franchissement de brèches humides ou sèches étant principalement, mais non exclusivement, un des champs d'activités principaux du génie militaire, la présente invention intéressera principalement la construction de véhicules amphibies militaires qui doivent être conformés pour pouvoir faire passer aussi bien des véhicules, notamment des véhicules militaires lourds, par exemple jusqu'à 110 tonnes, mais aussi du personnel avec leur équipement. De plus, il est souhaitable que le véhicule équipé de l'invention soit aéroportable afin qu'il puisse être déplacé rapidement d'une région vers une autre, et cela pour le moins par avion, de préférence aussi par hélicoptère.

Pour répondre à ces différentes attentes, le véhicule amphibie doit être conformé pour pouvoir être utilisé de façon satisfaisante et autant que possible équivalente tant sur l'eau que sur la terre ferme. De plus, il doit être en mesure de traverser sans aide extérieure la région intermédiaire entre l'eau et le sol et doit notamment pouvoir s'adapter à la morphologie des berges ou rives. Enfin, mais sans être exhaustif dans les caractéristiques requises d'un véhicule amphibie auquel répond le véhicule de l'invention, le véhicule amphibie doit pouvoir être utilisé tout aussi bien seul qu'en combinaison avec ou plusieurs autres véhicules de même conception pour former un pont flottant.

Afin de pouvoir répondre aussi bien aux exigences d'un déplacement routier que de la mise en place comme pont flottant, les éléments nécessaires pour former un pont, tels des caissons, des flotteurs et des rampes, ont déjà été disposés de différentes manières sur un véhicule formant une base roulante automotrice. Parmi les différentes configurations essayées, se trouve aussi celle d'une disposition tournante selon laquelle l'ensemble des caissons, rampes et éventuellement flotteurs forment un bloc monté pivotant sur la base roulante. Selon cette conception, lorsque le véhicule est mis à l'eau, l'axe longitudinal de la base roulante est orienté approximativement parallèle à la rive du fleuve ou du lac à traverser. Et lorsque le véhicule est en position, l'ensemble des éléments formant le pont est tourné dans un sens ou dans l'autre d'environ 90° autour d'un axe vertical.

Cependant, la diversité des morphologies des brèches humides ou sèches à traverser demande de pouvoir adapter la disposition des éléments formant un pont flottant. Dans ce sens, il s'est avéré désavantageux de devoir tourner l'ensemble des éléments et/ou de devoir déployer l'ensemble des éléments.

Des moyens escamotables ou pliants pour franchir des brèches sèches ou humides sont utilisées déjà depuis longtemps principalement, mais non exclusivement, par le génie militaire. De tels moyens sont utilisés aussi déjà depuis quelques temps sur véhicules routiers ou véhicules amphibies pour donner à ces moyens de franchissement une autonomie certaine, ce qui est particulièrement important en application militaire.

Ainsi, par exemple, le document FR-2 049 125 décrit un véhicule amphibie en pont muni de flotteurs placés au dessus du châssis du véhicule pour la circulation sur terre ferme, ces flotteurs pouvant se rabattre vers l'extérieur des deux côtés pour la circulation sur l'eau. En configuration repliée, les flotteurs, qui ont une section rectangulaire, sont placés avec leurs côtés étroits côte à côte au dessus du châssis du véhicule et sont guidés par les biellettes de telle façon que les côtés larges tournés l'un envers l'autre forment une surface de recouvrement continu après un déploiement des flotteurs. Ce véhicule présente le désavantage d'une hauteur assez importante en configuration repliée. Indépendamment du fait qu'une telle silhouette implique un risque d'instabilité lors de l'évolution du véhicule sur un terrain irrégulier, on comprend aisément qu'un tel véhicule se fait repérer plus facilement qu'un véhicule plat.

Un véhicule plus plat est décrit dans le document FR-A-2 383 035. Il s'agit d'un véhicule amphibie destiné à faire office de ponton ou de barge et comportant au moins deux flotteurs qui sont rangés l'un sur l'autre sur le corps du véhicule pendant que ce dernier circule sur la terre ferme. Ce véhicule ne comporte pas de rampes d'accès.

Le document EP-A-1 332 896 décrit un véhicule amphibie de franchissement et de transbordement comprenant, outre un flotteur principal automoteur et deux flotteurs latéraux basculants, deux rampes repliables basculantes latéralement, montantes et descentes hydrauliquement et formées chacune par une base de rampes et une extrémité de rampes. Dans ce véhicule amphibie, la cinématique de déploiement des deux flotteurs latéraux et des deux rampes est assez complexe, avec pour résultat, que lorsque la base de rampe est dépliée et l'extrémité de rampe est repliée, l'extrémité de rampe se trouve sur la face supérieure de la base de rampe et sur le flotteur latéral correspondant. En raison de cette configuration du véhicule amphibie, il faut déployer les flotteurs et les rampes entièrement pour pouvoir utiliser le véhicule.

Le but de l'invention est de proposer un véhicule amphibie conformé pour présenter différentes configurations de déploiement.

Le but de l'invention est atteint avec un véhicule amphibie comportant des éléments tels des caissons, des flotteurs et des rampes rangés les uns sur les autres sur une base roulante automoteur lorsque le véhicule est dans une configuration repliée pour déplacement sur la terre ferme et conformés pour pouvoir être déployés transversalement par rapport à un axe longitudinal de la base roulante lorsque le véhicule doit former, seul ou avec un autre véhicule de même conception, un pont flottant ou un bac permettant de franchir une brèche humide.

Selon l'invention, le véhicule comprend un dispositif de déploiement conformé pour commencer à déployer les éléments d'un côté avant de commencer à déployer les éléments de l'autre côté de la base roulante suivant au moins trois configurations différentes, les éléments de chaque côté comportant respectivement, de l'intérieur vers l'extérieur en configuration déployée, un caisson, un flotteur et une rampe articulés entre eux en Z,
le véhicule étant conformé pour que lorsque, en une première configuration de déploiement, les éléments de chaque côté sont déployés de façon minimale, chacun des flotteurs et rampes soit situé en dessous du caisson correspondant déployé..

Le véhicule de l'invention comporte donc deux ensembles d'éléments déployables, symétriquement agencés et disposés l'un sur l'autre sur la caisse du véhicule de manière que le premier ensemble soit déployé vers un côté de la base roulante et le second ensemble soit déployé vers l'autre côté de la base roulante.

De plus, en raison du rangement de l'un des deux ensembles sur l'autre en configuration repliée du véhicule, mais pour obtenir néanmoins un déploiement le plus rapide possible, le dispositif de déploiement est formé d'une part pour commencer à déployer les éléments de l'ensemble supérieur avant de commencer à déployer les éléments de l'autre côté de la base roulante et, d'autre part, pour commencer à déployer les seconds éléments lorsque le déploiement des premiers éléments est encore en cours.

Par ailleurs, le véhicule de l'invention est conformé pour obtenir un déploiement des éléments selon différentes configurations selon que le véhicule est utilisé seul ou en combinaison avec au moins un autre véhicule de même conception et selon la longueur du pont flottant ou du bac à établir.

A cette fin, l'invention concerne également les caractéristiques ci-après, considérées isolément ou selon toute combinaison techniquement possible :
- le véhicule est conformé pour que, selon une deuxième configuration de déploiement, les éléments d'un côté soient déployés de façon minimale et les éléments de l'autre côté sont entièrement déployés ;
- le véhicule est conformé pour que, selon une troisième configuration de déploiement, les éléments de chaque côté soient entièrement déployés ;
- le véhicule est conformé pour que, lorsqu'au moins deux véhicules sont connectés pour former un pont flottant ou un bac, les rampes sont maintenues repliées sur les côtés servant à l'interconnexion entre deux véhicules adjacents ;
- le véhicule comprend sur les caissons et sur les flotteurs des éléments de verrouillage permettant de verrouiller entre eux au moins deux véhicules pour réaliser un pont ou un bac ;
- les éléments de verrouillage sont disposés sur chaque interface de caisson et de flotteur de manière symétrique pour pouvoir réaliser tout type de connexion entre deux véhicules ;
- les éléments de verrouillage comportent sur chaque interface de caisson et de flotteur des verrous mâles et des verrous femelles ;
- chaque ensemble flotteur-rampe comporte des charnières débrayables permettant, selon l'embrayage / débrayage effectué, qu'un même vérin pilote respectivement le déploiement ou l'inclinaison de l'ensemble flotteur-rampe correspondant.

Le véhicule de l'invention est conçu de façon qu'il puisse se déplacer de manière autonome aussi bien sur la terre ferme, qu'en convoi exceptionnel et sur l'eau. Il peut aussi être transporté par un avion de transport. Sur route, le véhicule présente une autonomie de l'ordre de 800 km. Le châssis du véhicule réalisé sous la forme d'une caisse étanche comportant les éléments de propulsion et de transmission vers les essieux. Les essieux, généralement au nombre de trois, sont moteurs et directeurs et permettent ainsi au véhicule de circuler partout où un rayon de braquage de 25 mètres est suffisant. Les charges aux essieux n'excèdent pas 13 tonnes et la vitesse maximale sur terre ferme peut atteindre environ 65 km à l'heure. En mode tout terrain, le véhicule de l'invention présente des capacités de franchissements correspondants à ceux de la plupart des véhicules militaires terrestres qu'il aura à suivre à l'opération lorsqu'il s'agit d'un véhicule militaire. A titre indicatif, les dimensions principales du véhicule de l'invention sont d'une longueur d'environ 12 mètres en tout, une largeur inférieure à 3,60 mètres en tout et une hauteur inférieure à 3,80 mètres en tout.

En ce qui concerne l'agencement et le déploiement des éléments déployables du véhicule de l'invention, ceux-ci sont disposés de manière qu'un véhicule devant embarquer sur le pont flottant, embarque perpendiculairement à l'axe longitudinal de l'ensemble caisse/cabine. Par ailleurs, une articulation de l'accès aux berges est réalisée à la jonction entre caisson et flotteur, la longueur de chargement fixe étant égale à trois fois la largeur de la caisse.

Par ailleurs, en état entièrement déployé, le véhicule de l'invention présente des performances aquatiques qui respectent les critères définis par les normes en vigueur, par exemple en ce qui concerne le franc bord minimum, la vitesse de navigation, l'assiette et le gîte.

Le véhicule de l'invention est conçu par ailleurs de manière qu'il puisse être connecté à un véhicule de même conception et former ainsi un bac ayant une capacité de portage d'un véhicule à chenille lourd. De plus, cette combinaison de deux véhicules présente les mêmes capacités et performances de navigation (vitesse maximale en charge, tirant d'eau etc.) qu'un bac formé par un seul véhicule. En cas de connexion de deux véhicules, ceux-ci peuvent être déployés entièrement à l'exception des rampes du côté où la connexion doit être établie. En connexion longue, les deux véhicules sont connectés par l'interface flotteur/rampe tandis qu'en connexion courte, ils sont connectés par l'interface caisson/flotteur. Les deux véhicules connectés sont propulsés par deux fois deux moteurs aquatiques disposés de façon à pouvoir naviguer aux vitesses maximales dans n'importe quelle direction.

Pour transporter un véhicule à roues lourd, trois véhicules de l'invention peuvent être connectés pour former un bac.

Pour former un pont, plusieurs véhicules peuvent être reliés l'un à l'autre. Dans une telle combinaison, lorsque la brèche est si large qu'un seul véhicule est insuffisant, deux véhicules sont utilisés en module d'extrémité, c'est-à-dire du côté des berges, tous les éléments sont déployés, y compris les rampes, et du côté de la connexion avec l'autre - ou avec un autre - véhicule, seuls les caissons et éventuellement aussi les flotteurs sont déployés, en tout cas pas les rampes. Le cas échéant, un ou plusieurs véhicules sont utilisés comme module central ou comme modules intermédiaires en configuration de déploiement long, court ou demi-court, les rampes du module central ou des modules intermédiaires restant repliées dans tous les cas. Les différentes configurations possibles de déploiement des véhicules de l'invention confèrent au pont une capacité de couvrir toute largeur de brèche à partir de 29 mètres, le pas minimal étant inférieur à l'amplitude de recouvrement des rampes sur la berge.

D'autres caractéristiques et avantages de la présente invention ressortiront de la description ci-après d'un mode de réalisation du véhicule de l'invention. La description est faite en référence aux dessins dans lesquels
les figures 1 et 2 représentent un véhicule de l'invention en mode transport routier en perspective respectivement d'avant bas et d'avant haut,
la figure 3 représente le véhicule de la figure 1 en mode bac entièrement déployé,
la figure 4 représente un ensemble de deux véhicules de l'invention en mode bac reliés entre eux,
la figure 5 représente l'ensemble des deux véhicules de la figure 4 en une vue en perspective de dessous,
les figures 6A à 6D représentent la cinématique d'un déploiement court d'un véhicule de l'invention,
les figure 7A à 7E représentent la cinématique de déploiement d'un véhicule de l'invention entièrement déployé d'un côté et déployé en version courte de l'autre côté,
les figures 8A à 8E représentent la cinématique de déploiement d'un véhicule de l'invention jusqu'à déploiement entier des deux côtés du véhicule,
la figure 9 représente un véhicule de l'invention en une vue en perspective de dessous montrant les moyens de propulsion,
la figure 10 représente la caisse d'un véhicule de l'invention et des moyens de propulsion et de transmission,
la figure 11 représente les moyens de déploiement du flotteur et des rampes attachés à un caisson d'un véhicule de l'invention,
la figure 12 représente, de manière isolée, les deux caissons et les flotteurs et rampes associés d'un véhicule de l'invention, les éléments étant entièrement déployés,
la figure 13 représente la caisse d'un véhicule de l'invention avec l'emplacement des adductions et des moyens de refroidissement du moteur thermique et l'emplacement des moyens de déploiement,
la figure 14 représente en davantage de détails que la figure 13, les moyens de déploiement et leurs dispositions sur la caisse d'un véhicule de l'invention,
la figure 15 représente la superposition des deux caisses et des flotteurs et rampes associés d'un véhicule de l'invention, en état replié,
le figure 16 montre la disposition et la position des différents moyens de déploiement des flotteurs et des rampes sur un caisson d'un véhicule de l'invention,
la figure 17 représente schématiquement le déploiement d'un flotteur et le point d'attaque des efforts d'un vérin,
la figure 18 représente schématiquement un caisson et un flotteur déployé et le point d'attaque des efforts d'un vérin pour obtenir une inclinaison de l'ensemble caisson/flotteurs,
la figure 19 représente schématiquement en une vue en perspective de dessous, deux flotteurs adjacents avec leurs rampes correspondantes et les moyens de déploiement des rampes,
les figures 20A à 20G représentent la cinématique de déploiement des deux caissons d'un véhicule de l'invention,
les figures 21A à 21D représentent différentes vues du positionnement des vérins destinés au déploiement des flotteurs,
les figures 22A à 22D représentent le déploiement des rampes et la disposition des moyens permettant d'obtenir le déploiement des rampes,
les figures 23A à 23C représentent la cinématique d'un moyen de verrouillage d'un flotteur déployé sur le caisson,
les figures 24A et 24B représentent la cinématique d'ouverture d'un moyen de verrouillage assurant le maintien des rampes sur le flotteur correspondant,
la figure 25 représente en détail les moyens femelles d'un dispositif de verrouillage entre deux véhicules adjacents,
la figure 26 représente le positionnement des moyens femelles de verrouillage de la figure 25 sur des flotteurs d'un véhicule de l'invention,
la figure 27 représente en détail l'élément mâle d'un dispositif de verrouillage entre deux véhicules adjacents et
la figure 28 représente le positionnement des moyens mâles de la figure 27 sur des flotteurs d'un véhicule de l'invention.

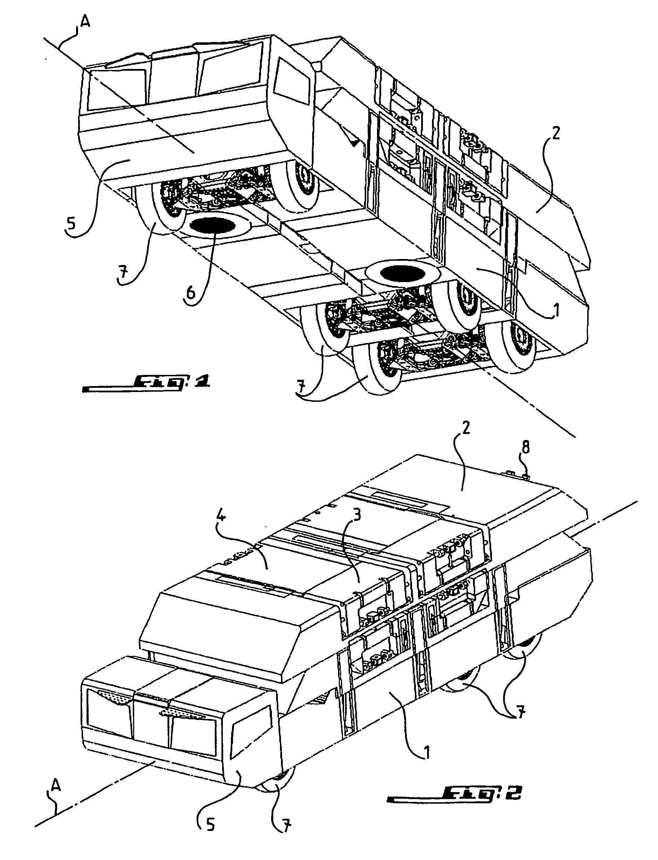

Un véhicule amphibie selon la présente invention, telle que représentée par exemple sur les figures 1 et 2, comprend une base roulante sous la forme d'une caisse autoporteuse étanche 1 en aluminium, avec une cabine blindée 5 pour au moins deux personnes, bien que le véhicule de l'invention puisse être opéré et manipulé par une seule personne, la cabine 5 étant solidaire de la structure de la caisse 1, et une chaîne cinématique à au moins trois essieux 7 dont chacun est pourvu de roues indépendantes. Chacun des essieux est à transmission intégrale pour chacune des deux roues et chacune des roues des au moins trois essieux est directrice.

La cabine 5 est conçue de manière que la sortie des occupants dans l'eau puisse s'effectuer par la partie supérieure des ouvrants latéraux. Cette sortie est facultative, car dans la cabine, l'espace et la visibilité sont suffisants pour la mise en oeuvre du ou des bac(s) ou du pont.

Le véhicule de l'invention comprend par ailleurs un ensemble de deux caissons 2, quatre flotteurs 3 et quatre rampes 4 permettant de constituer la voie de roulement dans le prolongement de la partie centrale de la caisse 1.

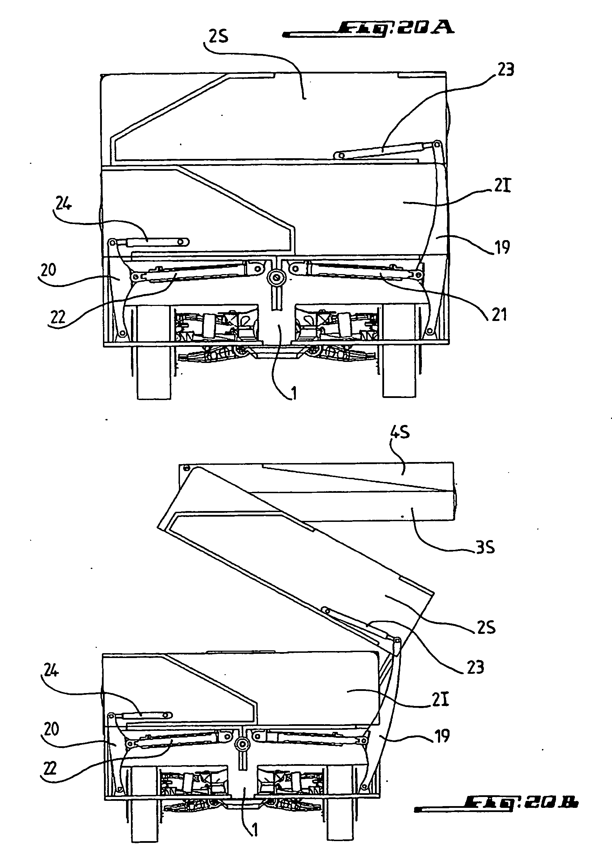

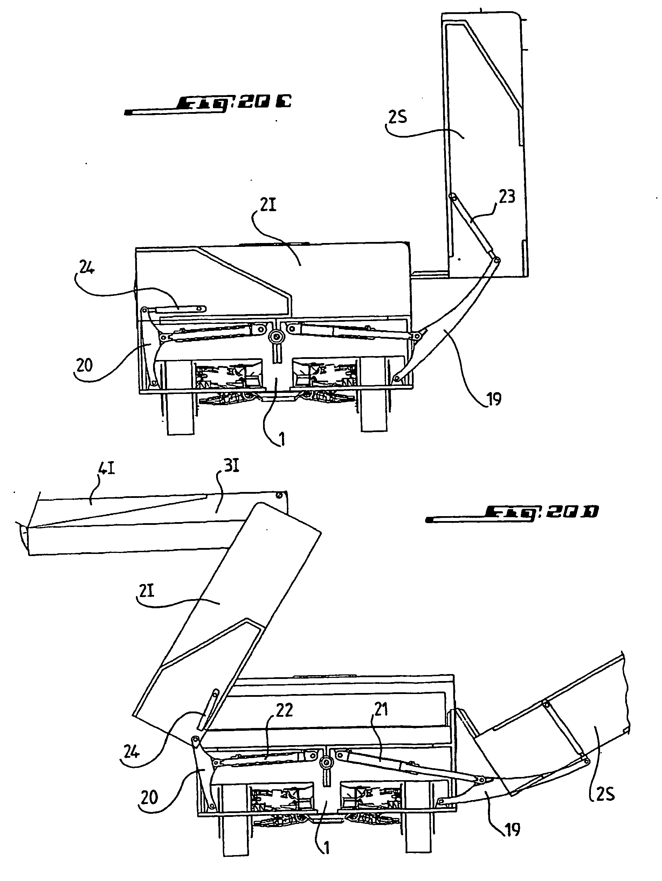

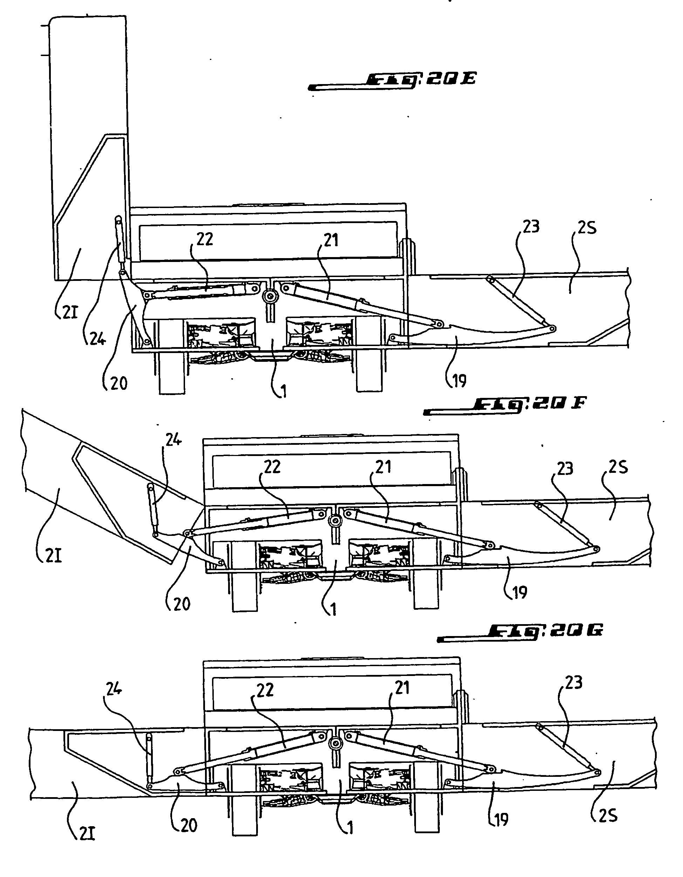

Le déploiement et le reploiement des caissons 2, des flotteurs 3 et des rampes 4 sont obtenus à l'aide d'un dispositif comportant des biellettes, des vérins et des palonniers disposés à chaque jonction d'éléments. Ces dispositions de mise en oeuvre du déploiement et du reploiement des éléments du véhicule de l'invention sont décrits plus loin, par exemple en référence aux figures 20A à 20G.

Sur le véhicule de l'invention, et plus particulièrement sur la caisse 1, les éléments pouvant être déployés, à savoir les deux caissons 2, les quatre flotteurs 3 et les quatre rampes 4, sont conformés et disposés d'une part de manière à pouvoir être déployés transversalement à un axe longitudinal de la base roulante ou caisse 1 et, d'autre part, de façon à pouvoir être déployés respectivement vers l'un ou vers l'autre des deux côtés du véhicule de l'invention. A cet effet, chacun des deux caissons 2 est articulé sur la caisse 1 de manière à pouvoir être déployé respectivement sur le côté droit ou sur le côté gauche du véhicule et par ailleurs de façon que, en étant entièrement déployé des éléments, chacun des caissons est prolongé par deux flotteurs 3 qui, de leur côté sont prolongés par deux rampes 4. Chacun des deux ensembles formés par un caisson 2, deux flotteurs 3 et deux rampes 4 est articulé en Z. En outre, les deux ensembles caisson/flotteurs/rampes sont disposés l'un au dessus de l'autre, ce qui implique un ordre prédéterminé de déploiement et reploiement, les deux caissons ne pouvant donc pas être déployés simultanément, mais avec un décalage du début de déploiement ou respectivement du début d'un reploiement de l'un des ensembles caisson/flotteurs/rampes avant l'autre.

Les deux ensembles caisson/flotteurs/rampes sont, à quelques détails près, identiques l'un à l'autre et sont disposés l'un au dessus de l'autre et orientés dans le sens opposé l'un par rapport à l'autre. Les différences entre les deux ensembles concernent principalement les articulations des deux caissons sur la caisse 1, puisque l'un des deux caissons est disposé au dessus de l'autre et est donc plus éloigné de la caisse 1. Ceci implique, par exemple, des biellettes plus longues pour le caisson supérieur par rapport aux biellettes du caisson inférieur et un passage dans le caisson inférieur afin de pouvoir laisser passer les biellettes du caisson supérieur.

Le véhicule de l'invention est équipé, par ailleurs, d'un système de propulsion aquatique référencé 6 sur la figure 1, ainsi que d'un échappement 8 représenté sur la figure 2.

La conception de l'invention, selon laquelle les deux ensembles caisson/flotteurs/rampes sont disposés l'un au dessus de l'autre lorsque le véhicule est en état reployé, et non pas l'un à côté de l'autre, permet de donner à chacun des deux caissons et à chacun des deux flotteurs une longueur de piste, mesuré transversalement par rapport à l'axe longitudinal A de la caisse 1, qui correspond à la largeur entière de la caisse 1. De plus, la conception de l'invention permet de donner même à chacune des rampes une longueur de piste correspondant à la largeur entière de la caisse 1. Le fait que dans le mode de réalisation du véhicule de l'invention représenté dans les dessins annexés, les rampes 4 ont une longueur de piste inférieure à la longueur de piste des flotteurs 3 est arbitraire et ne limite aucunement le principe de conception énoncé ci avant.

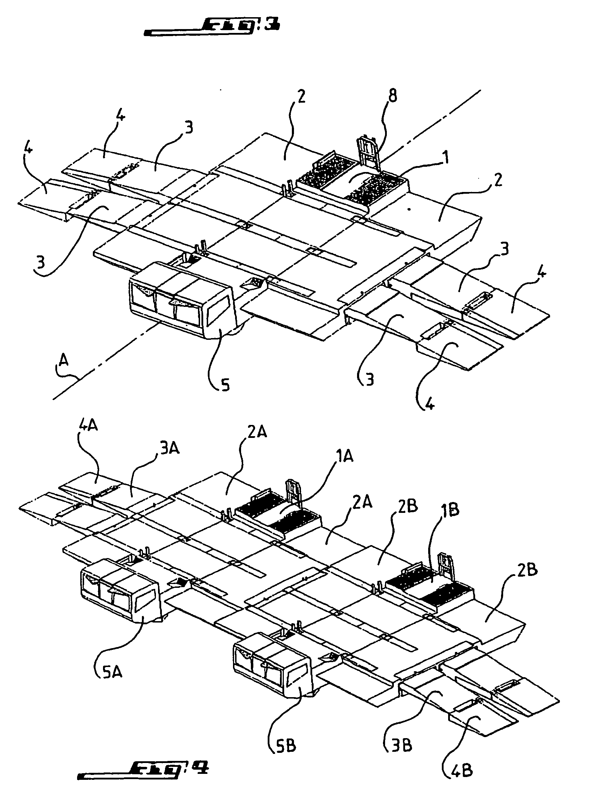

La figure 3 représente le véhicule de l'invention en mode déployé et formant à lui seul un bac ou un pont flottant. On notera pour cette figure 3 et les autres figures que, compte tenu de l'identité presque entière des caissons 2 entre eux, des flotteurs 3 entre eux, et des rampes 4 entre elles, et pour ne pas encombrer la description de l'invention, les caissons, les flotteurs et les rampes sont référencés respectivement en 2, 3 et 4 sans distinction du côté du véhicule, droit ou gauche, vers lequel ils sont déployés, ni distinction de leur position, supérieure ou inférieure, lorsqu'ils sont reployés. Des exceptions à cette règle concernent les cas où une distinction est inévitable en raison des détails traités.

Dans le mode de déploiement de la figure 3, le véhicule est entièrement déployé, c'est-à-dire les flotteurs et les rampes sont tous déployés. Un véhicule destiné à traverser le pont flottant ou à être transporté sur le bac, embarque perpendiculairement à l'ensemble caisse/cabine, c'est-à-dire transversalement par rapport à l'axe longitudinal A de la caisse 1. L'articulation de l'accès aux berges étant réalisée à la jonction entre le caisson 2 et les flotteurs 3, la longueur de chargement fixe est égale à trois fois la largeur de la caisse.

La figure 4 représente un mode de déploiement qui diffère de celui de la figure 3 par le fait que le bac ou pont flottant est formé par plus d'un véhicule, ici en l'occurrence par deux véhicules. A cet effet, deux véhicules selon l'invention sont disposés parallèlement l'un à l'autre et espacés l'un de l'autre autant qu'il faut pour qu'ils puissent être raccordés l'un à l'autre par leurs caissons 2 correspondants.

En effet, selon le mode de déploiement représenté sur la figure 4, un premier véhicule de l'invention comportant une caisse 1A et une cabine de conduite 5A se présente à côté d'un second véhicule ayant une caisse 1B et une cabine de conduite 5B. Sur le premier véhicule, seul le caisson 2A orienté vers le second véhicule est déployé. De manière analogue, sur le second véhicule, seul le caisson 2B orienté vers le premier véhicule est déployé. Les deux véhicules sont reliés l'un à l'autre par les deux faces en regard des deux caissons respectifs 2A, 2B.

Et sur les deux côtés opposés respectifs des deux véhicules de l'invention, c'est-à-dire sur les deux côtés extérieurs de cette unité de véhicules de l'invention, dont les rampes sont destinées à prendre appui sur les berges d'une brèche à surmonter, tous les éléments des deux ensembles caisson/flotteurs/rampes sont déployés. De manière analogue au mode de déploiement représenté sur la figure 3, la longueur de chargement fixe de l'unité formé par les deux véhicules de l'invention est égale à six fois la largueur d'un véhicule.

Le mode de déploiement pour bac ou pont flottant représenté sur la figure 4 n'étant pas limité à deux véhicules, la configuration selon ce mode de déploiement peut être décrit comme suit : le bac ou pont flottant est formé par une suite, indiquée dans l'ordre des éléments formant la piste destinée à recevoir des véhicules, de deux rampes 4A, deux flotteurs 3A, un caisson 2A, la caisse 1A d'un premier véhicule de l'invention, l'autre caisson 2A du premier véhicule, un caisson 2B d'un deuxième véhicule, la caisse 1B du deuxième véhicule, l'autre caisson 2B du deuxième véhicule, autant de suites de caisson - caisse - caisson qu'il y a de véhicules au-delà d'un total de trois véhicules et enfin, sur le dernier véhicule dans l'ordre, un caisson 2x, la caisse 1x, l'autre caisson 2x, deux flotteurs 3x et deux rampes 4x.

Il est précisé ici, à toutes fins utiles, que dans les représentations des figures 3 et 4 et sur d'autres figures des dessins annexés, les caisses 1 sont représentées sans les essieux 7 ni les éléments moteurs, ni encore des platelages centraux renfermant l'espace entre les flotteurs et les rampes ni enfin des rehausses que l'on peut prévoir au bord des caissons 2 et donc de la piste sur laquelle un véhicule passe, l'ensemble de véhicules formant un pont flotteur ou un bac.

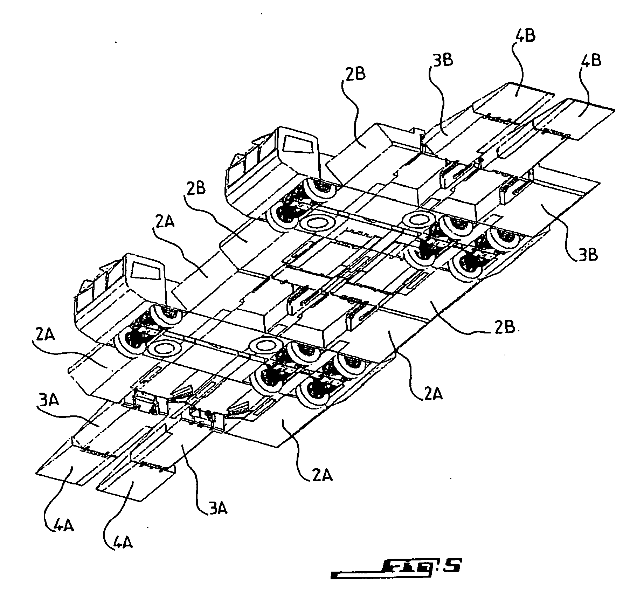

La figure 5 représente une unité formant bac ou pont flottant formée par deux véhicules de l'invention, en une vue en perspective de dessous de l'unité. Il s'agit donc de la même composition de véhicules de l'invention que sur la figure 4. Toutefois, la figure 5 permet de situer les différents moyens nécessaires au déploiement et au reploiement des éléments de chacun des véhicules de l'invention.

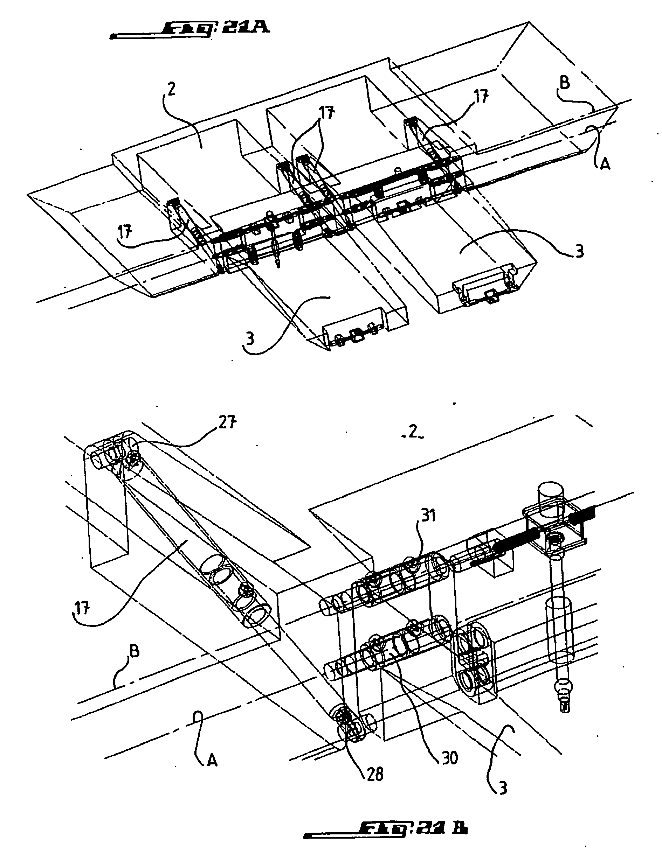

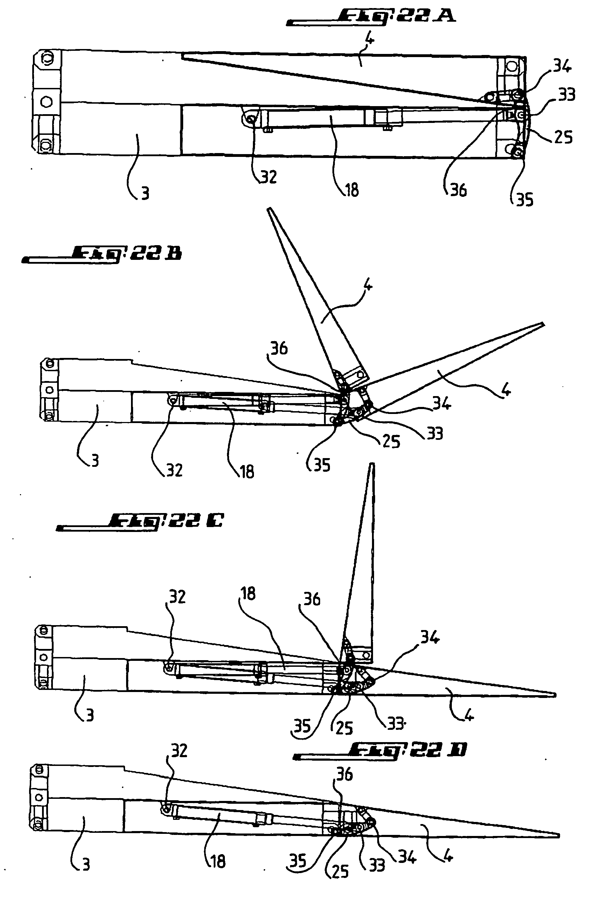

Ainsi, on voit, par exemple, la disposition des biellettes par lesquelles les rampes 4A ou 4B sont articulées aux flotteurs correspondants 3A ou 3B ainsi qua la disposition de vérins à la jonction entre les caissons 2A ou 2B et les flotteurs correspondants 3A ou 3B. Pour plus de détails, voir les figures 21A à 21D et 22A à 22D.

Bien que cela ne soit pas représenté expressément dans les dessins, il est également concevable que les deux véhicules de l'invention soient déployés en configuration connexion longue et accouplés pour former une unité destinée à servir comme pont flottant ou comme bac. Dans ce cas, sur les côtés extérieurs de chacun des véhicules, les caissons 2, les flotteurs 3 et les rampes 4 sont entièrement déployés pour assurer l'appui sur les berges d'une brèche. Du côté intérieur, c'est-à-dire sur les deux côtés destinés à coopérer dans la connexion des deux véhicules l'un à l'autre, et donc en variante de ce qui est représenté sur les figures 4 et 5, sur chacun des véhicules aussi bien sur les caissons 2 que les flotteurs 3 sont déployés. Seules les rampes 4 restent reployées sous les flotteurs correspondants.

Pour permettre aussi bien une combinaison de deux véhicules déployés en configuration connexion courte qu'en configuration connexion longue, aussi bien les caissons que les flotteurs sont équipés de moyens de verrouillage permettant respectivement le verrouillage d'un caisson d'un premier véhicule sur un caisson d'un second véhicule ou le verrouillage des flotteurs d'un premier véhicule sur les flotteurs d'un second véhicule.

Par ailleurs, en ce qui concerne la propulsion d'un ensemble de deux ou plusieurs véhicules formant un bac, l'ensemble des deux ou plusieurs véhicules est propulsé par l'ensemble des moteurs aquatiques afin de pouvoir naviguer aux vitesses maximales dans n'importe quelle direction.

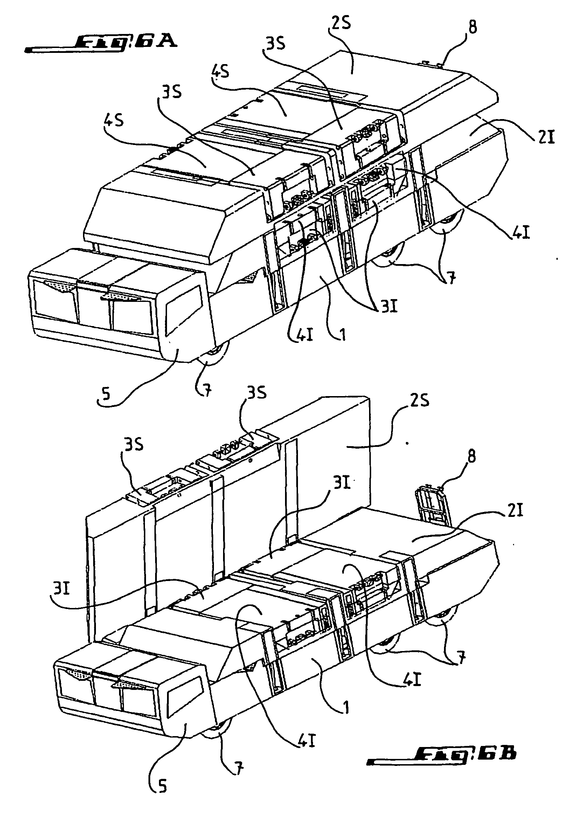

Afin de remplir les fonctions de véhicule amphibie de franchissement de brèche humide, le véhicule de l'invention doit pouvoir se déployer suivant au moins trois configurations différentes, et cela grâce à un dispositif de mise en oeuvre central qui permet par exemple les cinématiques représentées sur les figures 6A à 6D, 7A à 7E et 8A à 8E. Dans ces trois suites de figures, les figures 6A, 7A et 8A représentent un véhicule de l'invention dans son état reployé c'est-à-dire en configuration de déplacement sur route ou autre terrain solide par opposition à un milieu aquatique.

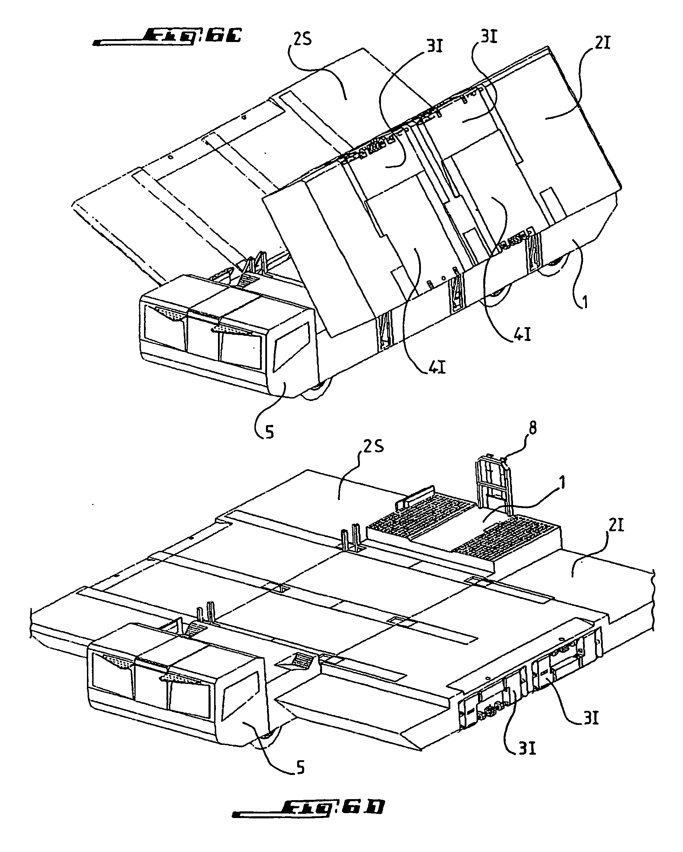

Ainsi, un véhicule de l'invention comporte, outre sa caisse 1, la cabine de conduite 5, les essieux 7 et l'échappement 8, un caisson inférieur 2I et un caisson supérieur 2S articulés respectivement sur un côté ou sur l'autre de la caisse 1. Sur le caisson 2I sont articulés deux flotteurs 3I sur lesquels sont articulés, de leurs côtés, deux rampes 4I. Selon le mode de réalisation représenté sur les séries de figures 6, 7 et 8, le caisson inférieur 2I est articulé sur le côté gauche de la caisse 1 du véhicule alors que le caisson supérieur 2S est articulé sur le côté droit du véhicule. Les notions droites et gauches se réfèrent au sens de la marché avant du véhicule.

En raison de l'articulation en Z entre le caisson 2, les flotteurs 3 et les rampes 4 de chaque ensemble caisson/flotteurs/rampes, les flotteurs 3I sont articulés sur le caisson 2I du côté droit du véhicule et les rampes 4I sont articulés sur les flotteurs 3I du côté gauche du véhicule. De manière analogue, les flotteurs 3S sont articulés sur le caisson 2S du côté gauche du véhicule et les rampes 4S sont articulées sur les flotteurs 3S du côté droit du véhicule.

A partir de cette configuration des éléments du véhicule de l'invention représentés dans les dessins annexés, le déploiement court des éléments, représenté sur les figures 6A à 6D, commence avec le déploiement du caisson supérieur 2S sur lequel restent, dans un premier temps, en état reployé les flotteurs 3S et les rampes associées 4S.

Lorsque le déploiement du caisson 2S est suffisamment avancé pour dégager un espace d'évolution en pivotement pour le caisson inférieur 2I, le déploiement de ce dernier commence. De manière analogue au déploiement du caisson supérieur 2S, le déploiement du caisson inférieur 2I se fait, dans un premier temps, en maintenant les flotteurs inférieurs 3I et les rampes inférieures 4I en état reployé contre le caisson inférieur 2I.

La figure 6C représente une étape intermédiaire de déploiement du véhicule de l'invention où le caisson supérieur 2S est presque entièrement déployé alors que le caisson inférieur 2I n'a pas encore dépassé la position verticale. En même temps, on peut observer sur la figure 6C que les flotteurs et les rampes restent reployés sur le caisson, puisque le véhicule doit être déployé en version courte.

La figure 6D montre enfin le véhicule de l'invention dans son état de déploiement court, c'est-à-dire seuls les caissons supérieurs 2S et inférieurs 2I sont déployés, et les flotteurs et rampes correspondants sont maintenus reployés contre les caissons correspondants. Les flotteurs 3S, 3I, et les rampes 4S, 4I se trouvent alors en dessous du caisson 2S ou 2I correspondant.

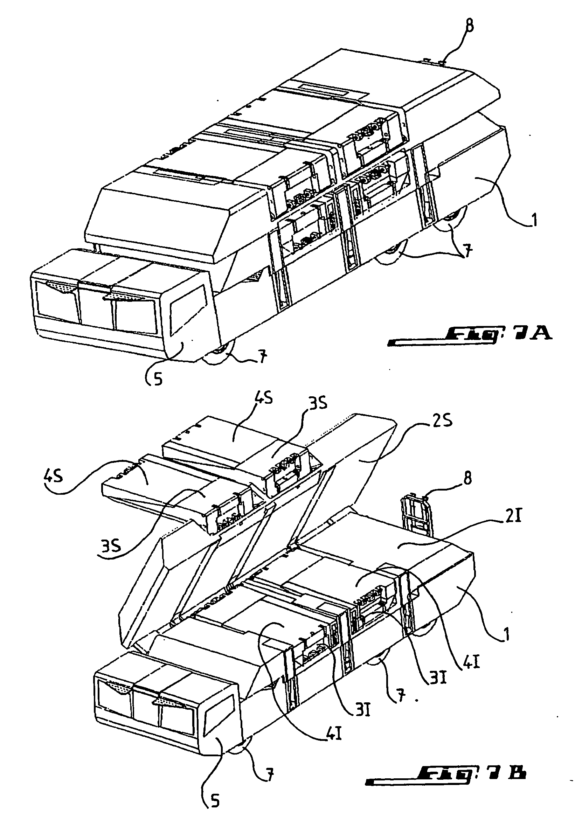

La suite de figures 7A à 7E représente un mode de déploiement demi court d'un véhicule de l'invention. Le déploiement commence par le soulèvement du caisson supérieur 2S. Lorsque celui-ci a atteint un certain degré de déploiement, les flotteurs supérieurs 3S sont déployés, les rampes supérieures 4S restant accolées aux flotteurs correspondants 3S.

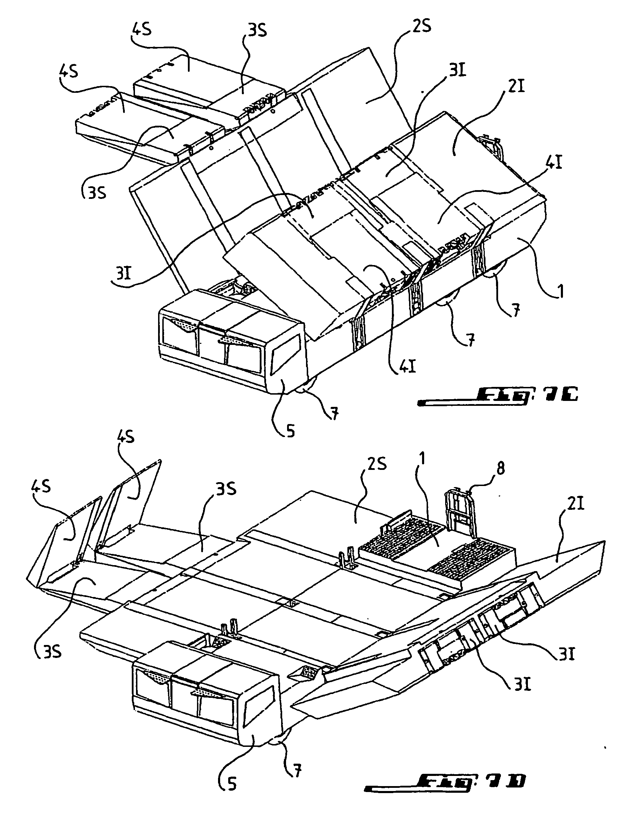

Lorsque le caisson supérieur 2S a dépassé un certain degré de déploiement dégageant l'espace d'évolution nécessaire pour le caisson inférieur 2I, le déploiement du caisson inférieur 2I commence avec, de manière analogue au déploiement du caisson supérieur 2S, les flotteurs 3I et les rampes 4I maintenus en état de reploiement contre le caisson 2I. Cette situation intermédiaire est représentée sur la figure 7C.

A un instant ultérieur de déploiement représenté sur la figure 7D, le caisson supérieur 2S est entièrement déployé tout comme les flotteurs supérieurs 3S, alors que les rampes supérieures 4S sont relevées pour former une limitation de la piste de stockage ou de circulation du pont ou du bac. En même temps, le caisson inférieur 2I est assez avancé dans son déploiement, les flotteurs correspondants 3I et les rampes associées 4I étant maintenus racolées au caisson 2I.

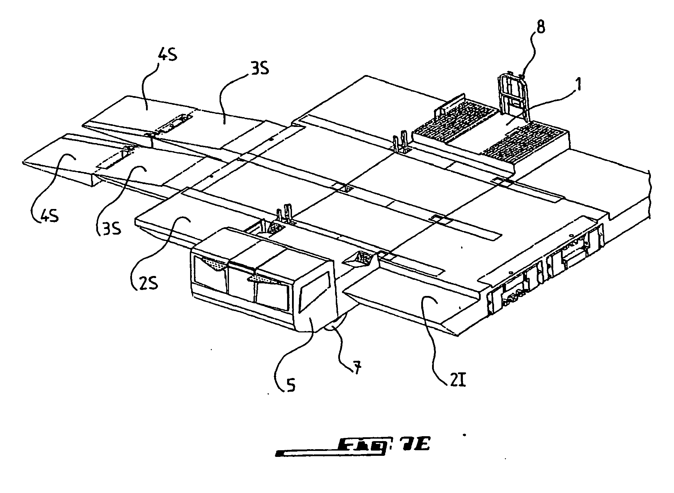

La figure 7E représente l'état final de déploiement demi court du véhicule de l'invention. Dans cet état de déploiement, les caissons supérieur 2S et inférieur 2I sont entièrement déployés et du côté droit du véhicule les flotteurs supérieurs 3S et les rampes supérieurs 4S sont également entièrement déployés. Par contre, du côté gauche du véhicule, les flotteurs inférieurs 3I et les rampes associées 4I restent maintenus racolés au caisson inférieur 2I. Il y a donc un déploiement entier du côté droit du véhicule alors qu'il y a un déploiement partiel dit à connexion courte, du côté gauche du véhicule.

Comme le laisse entrevoir par exemple la figure 4, la disposition inversée est également possible. Dans ce cas, il y a du côté droit du véhicule uniquement un déploiement du caisson 2S, alors que du côté gauche du véhicule il y a un déploiement entier du caisson inférieur 2I, des flotteurs inférieurs 3I et des rampes correspondantes inférieurs 4I.

Une fois de plus, il est observé que dans ces séries de représentations cinématiques de déploiement, des moyens accessoires tels des platelages centraux et des rehausses latérales ne sont pas représentés.

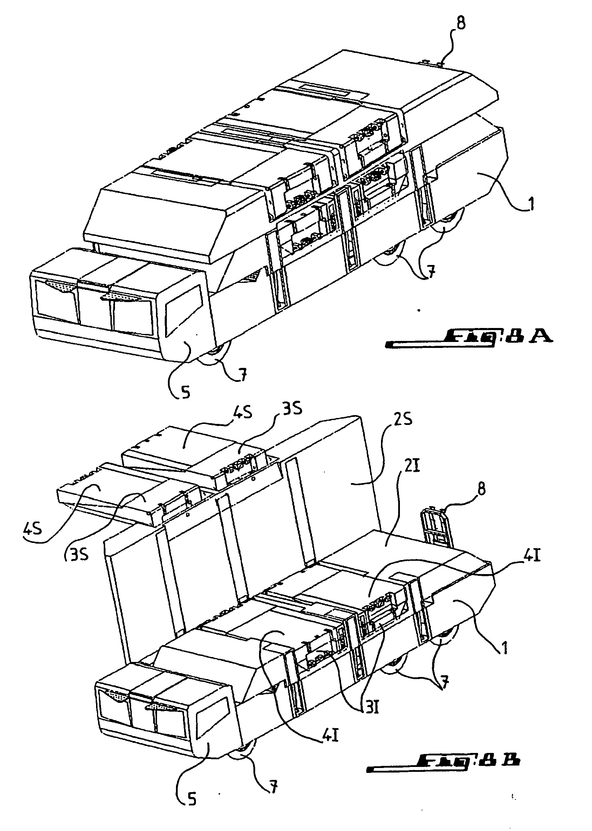

Lors d'un déploiement selon un troisième mode de déploiement représenté sur les figures 8A à 8E, le déploiement des éléments commence avec le déploiement du caisson supérieur 2S suivi d'un déploiement des deux flotteurs supérieurs 3S lorsque le caisson supérieur 2S a atteint un certain degré de déploiement. Cette situation est représentée sur la figure 8B.

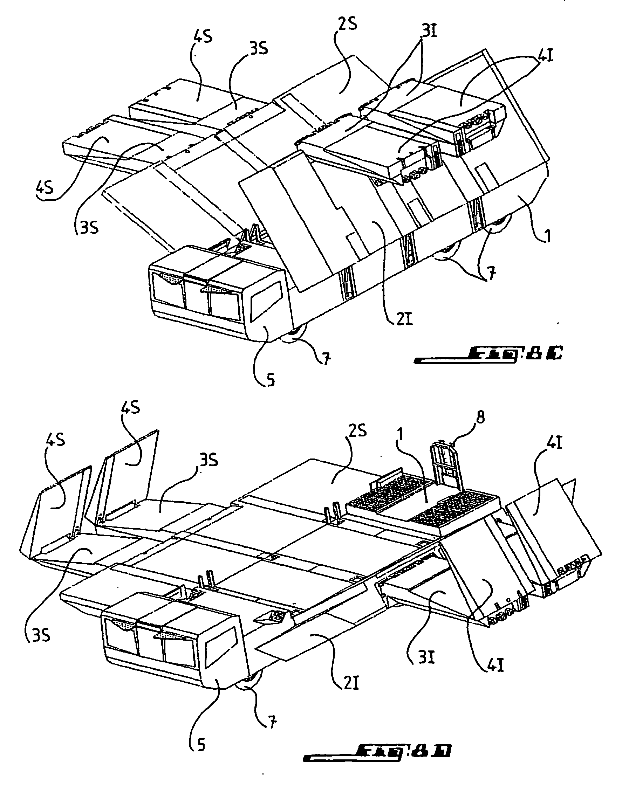

La figure 8C montre le déploiement à un instant ultérieur lorsque le caisson supérieur 2S est déjà largement déployé et les flotteurs supérieurs 3S sont également déployés, tout en maintenant les rampes associées 4S racolés aux flotteurs supérieurs 3S. En même temps, le déploiement des caissons inférieurs 2I a commencé tout comme le déploiement des flotteurs inférieurs 3I. A cette étape, les rampes associées 4I sont encore racolées aux flotteurs correspondants 3I.

La figure 8D représente le véhicule de l'invention presque entièrement déployé en mode long : du côté droit du véhicule, le caisson supérieur 2S et les flotteurs correspondants 3S sont entièrement déployés alors que les rampes associées 4S sont encore en train d'être déployées. De l'autre côté, le caisson inférieur 2I et les flotteurs inférieurs 3I sont également entièrement déployés, les rampes associées inférieures 4I étant encore en cours de déploiement, mais moins déployés que les rampes supérieures 4S de l'autre côté.

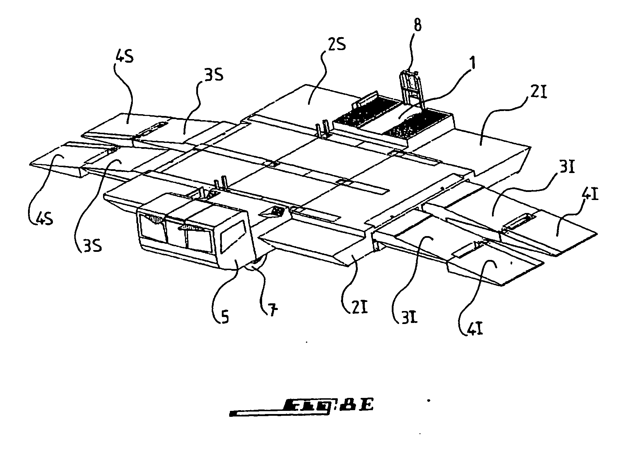

La figure 8E représente enfin le véhicule de l'invention dans son état de déploiement long entier : les caissons supérieur 2S et inférieur 2I, ainsi que les flotteurs correspondants 3S et 3I tout comme les rampes associées 4S et 4I sont entièrement déployés.

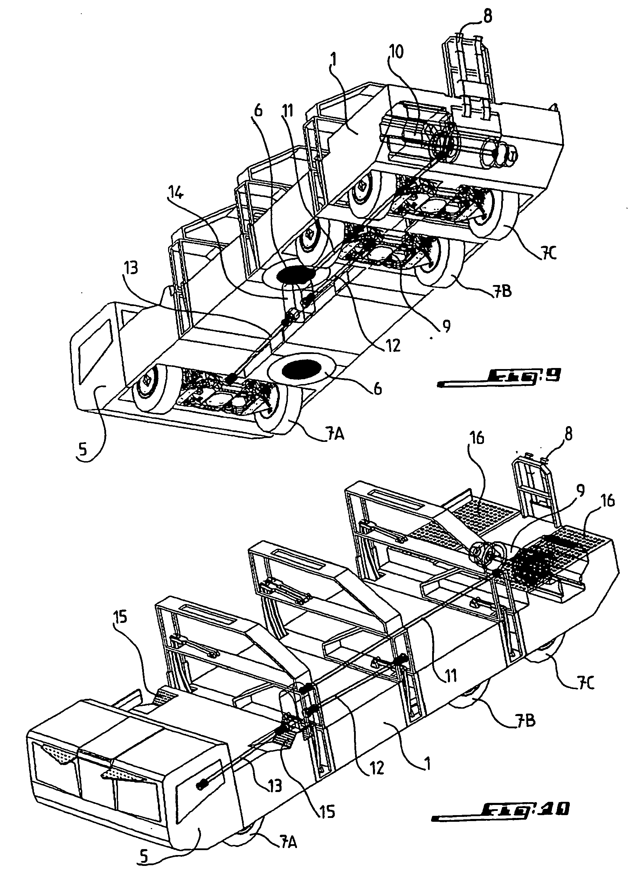

La figure 9 représente la base roulante auto moteur 1 du véhicule de l'invention en une perspective par en dessous. On voit sur cette figure plus particulièrement la disposition de trois essieux 7, portant ici et sur la figure 10 les références 7A, 7B, 7C, dont l'essieu 7A est l'essieu avant, solitaire, et dont les deux essieux 7B, 7C sont disposés comme essieux arrières tandem. La figure 9 représente également la disposition des deux moyens de propulsion aquatique 6 et la disposition de moyens de transmission 11 à 14 assurant la transmission de la force de traction du moteur 10 aux essieux 7 et aux moyens de propulsion aquatique 6. Les moyens de transmission comportent essentiellement un arbre de transmission 11 reliant le moteur 10 à celui des deux moyens de propulsion aquatique 6 situés le plus proche du moteur 10, un arbre de transmission 12 reliant l'essieu avant du tandem, donc l'essieu 7B, à une boîte de transfert 14 qui, elle, est reliée à l'essieu avant 7A par un arbre de transmission 13. La liaison entre le moteur 10 et les deux essieux arrière 7B, 7C est assurée par une boîte de vitesses non représentée en détail sur la figure 9. Ainsi le groupe moto propulseur, auquel appartient le moteur de thermique 10, disposé en position transversale arrière, transmet l'énergie mécanique aux trois essieux 7 via une chaîne de transmission mécanique avec arbres et cardans dont la boîte de transfert 14 montée en position centrale répartit le couple du moteur suivant les informations de motricité provenant de chaque roue.

La propulsion aquatique est assurée par les deux moyens de propulsion aquatique 6 qui se présentent, par exemple, sous la forme de pompes centrifuges, en prise directe sur le moteur via une prise de force et transmise par l'intermédiaire de l'arbre de transmission 11 et des cardans.

La figure 10 représente la base roulante 1 d'un véhicule de l'invention en une vue en perspective par en haut. Cette figure montre plus particulièrement la disposition de collecteurs 15 pour l'admission d'air, situés en partie avant de la caisse 1, l'air étant conduit par des tubulures non représentées, vers une boîte à air située proche du groupe moto propulseur. Pour le refroidissement du moteur 10, le véhicule est équipé d'un système de refroidissement du type échangeur air/eau ventilé en un circuit fermé avec des radiateurs 16 positionnés sur la caisse 1 en partie arrière. Les figures 9 et 10 représentent aussi la disposition d'un échappement 8 en partie arrière du véhicule et surélevé par rapport au niveau de la caisse 1.

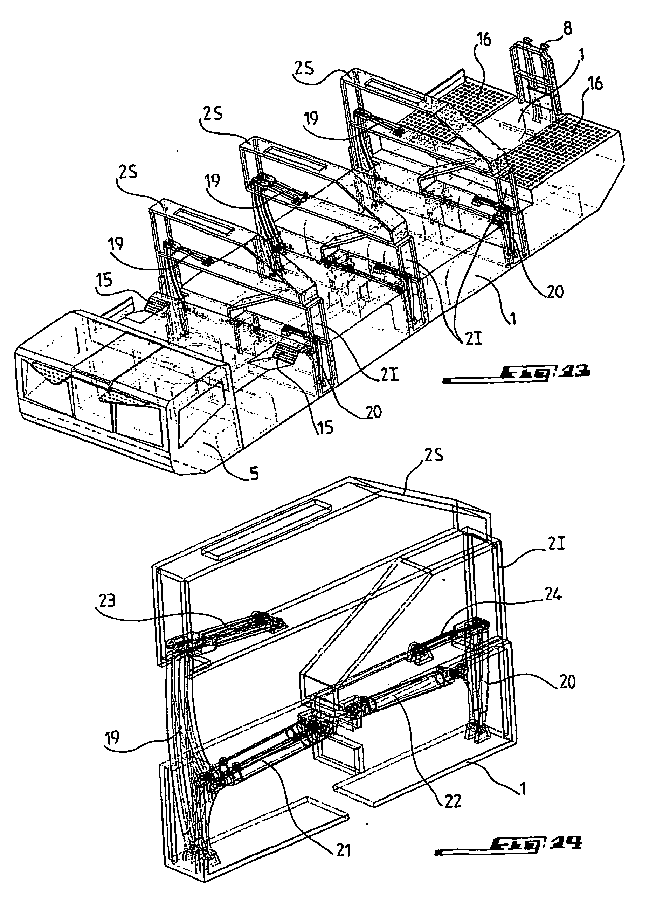

Les figures 9 et 10 représentent par ailleurs la disposition de palonniers intervenant au déploiement et au reploiement des caissons comme cela sera décrit plus loin, notamment en référence aux figures 13 et 14.

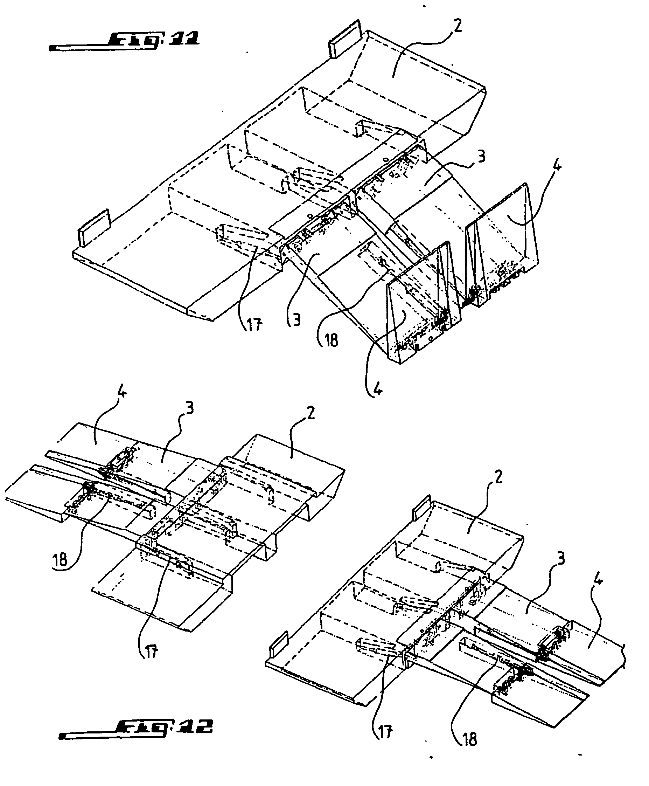

La figure 11 représente, de manière isolée, un caisson 2, deux flotteurs 3 et deux rampes 4 en cours de déploiement.

La figure 11 représente plus particulièrement la disposition de différents moyens du mécanisme de déploiement des flotteurs et des rampes. Rappelons à ce sujet que les ensembles caisson/flotteurs/rampes constituent la voie de roulement du véhicule, et cela en continuité avec la partie centrale de la caisse 1. Les caissons 2 sont donc les parties intérieures qui sont toujours déployées lors de la mise en oeuvre d'un parcours d'un pont flottant. Ils sont articulés sur la caisse 1 par l'intermédiaire de dispositifs de mise en oeuvre centraux dont trois sont dédiés au caisson inférieur et quatre au caisson supérieur.

Les flotteurs 3 sont articulés sur le caisson 2. Ils sont déployés ou non lors de la mise en oeuvre moyennant quatre vérins 17 dont la disposition est représentée schématiquement sur la figure 11. De manière correspondante, les rampes 4 sont articulées en bout des flotteurs 3. Le déploiement et le reploiement de chacune des rampes 4 par rapport au flotteur 3 auquel elles sont articulées, sont effectués moyennant des vérins 18.

La figure 12 représente la disposition de l'ensemble des moyens de déploiement des flotteurs et rampes. Les caissons 2, flotteurs 3 et rampes 4 sont représentés dans la position entièrement déployée.

La figure 13 représente la caisse 1 avec une cabine 5 d'un véhicule selon l'invention et la disposition sur cette caisse 1 de palonniers 19, 20 sur la caisse 1. Sur la figure 13, le caisson supérieur 2S et le caisson inférieur 2I sont représentés par des cadres portant les références respectives 2S, 2I.

La figure 14 représente davantage ? de la figure 13, le mécanisme de déploiement des caissons 2. Les caissons 2 sont représentés par des cadres référencés respectivement 2S pour le caisson supérieur et 2I pour le caisson inférieur.

Le déploiement du caisson supérieur 2S est obtenu moyennant le palonnier 19 qui est articulé directement sur la caisse 1 par une de ses deux extrémités et, par l'autre extrémité sur le caisson supérieur 2S par l'intermédiaire de deux biellettes 23. Le palonnier 19 est actionné par un vérin 21 articulé sur la caisse 1.

De manière analogue, le déploiement du caisson inférieur 2I est obtenu moyennant le palonnier 20 qui est articulé directement sur la caisse 1 et indirectement par le biais de deux biellettes 24 sur le caisson inférieur 2I. Le palonnier 20 est actionné par un vérin 22 articulé sur la caisse 1.

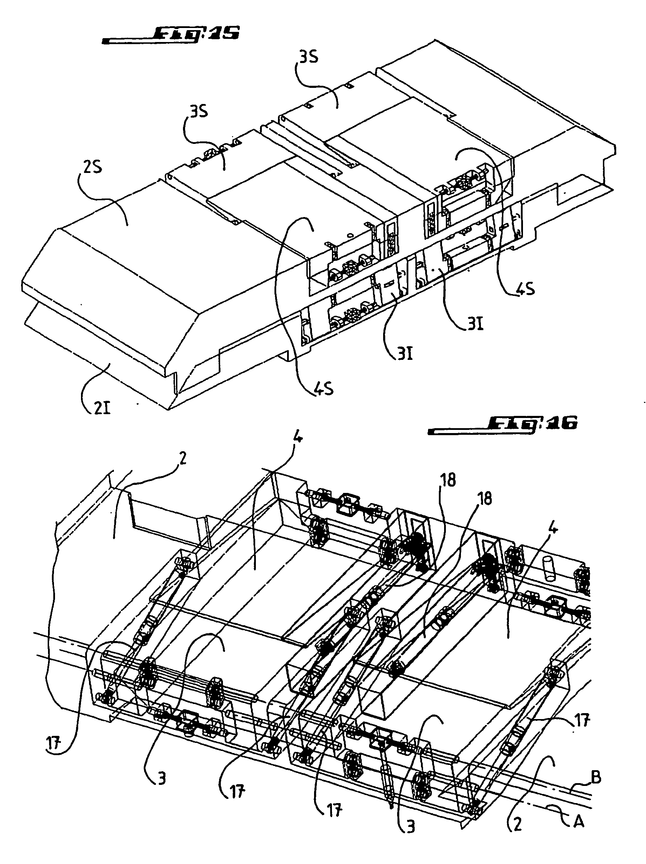

La figure 15 représente les deux caissons supérieur 2S et inférieur 2I en position reployée, c'est-à-dire l'un sur l'autre. Cette représentation diffère de celles que l'on retrouve, par exemple, sur les figures 6A, 7A, et 8A, par le côté sur lequel on a un regard : ici, on voit le côté droit de l'ensemble de ses deux caissons. En conséquence, lors du déploiement du caisson supérieur 2S, celui pivote vers l'observateur de la figure 15 alors que le caisson inférieur 2I pivote vers le fond de l'image de la figure 15. En conséquence, on voit bien en position de repos ou reployé le caisson supérieur 2S, les deux flotteurs 3S et les deux rampes 4S, alors que, dans la partie inférieur on ne voit que le caisson inférieur 2I et les deux flotteurs inférieurs 3I.

La figure 16 représente un caisson 2 avec les flotteurs 3 et les rampes 4 associées en état reployé. Sur cette figure, on voit plus particulièrement la disposition des différents moyens du mécanisme de déploiement des flotteurs dont font parties les vérins 17 et les moyens du mécanisme de déploiement des rampes 4 dont font partie les vérins 18.

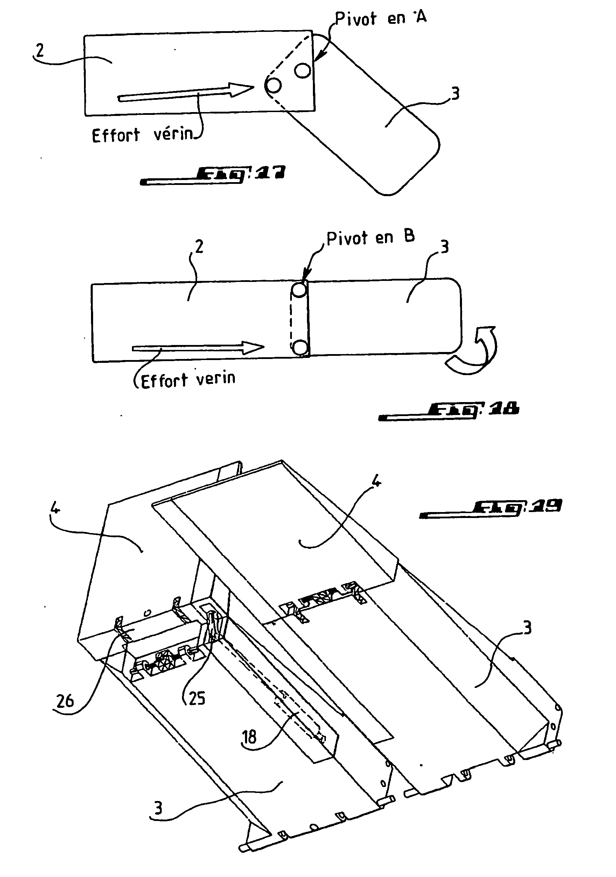

La figure 16 montre par ailleurs aussi deux axes de pivotement référencés respectivement A et B autour desquels les flotteurs 3 pivotent en fonction de leur situation momentanée de déploiement. Ainsi, comme on le voit également sur la figure 17, le flotteur 3 pivote autour de l'axe A lorsqu'il est déployé à partir de la position de reploiement complète vers la position de reploiement complète.

Lorsque le flotteur est entièrement déployé, son inclinaison par rapport au caisson peut varier en le faisant pivoter autour de l'axe B comme cela est représenté aussi sur la figure 18. Le pivotement alternatif autour de l'axe A ou autour de l'axe B, selon le degré de déploiement du flotteur, est possible grâce au fait que les axes A et B sont des éléments débrayables.

La figure 19 représente, en une vue en perspective par en dessous, deux flotteurs 3 et deux rampes 4 articulées sur les flotteurs 3. Alors que la rampe droite est entièrement déployée, la rampe gauche ne l'est qu'en partie. La figure 19 représente plus particulièrement le vérin 18 moyennant lequel la rampe 4 est actionnée ainsi qu'une biellette 25 sur laquelle le vérin 18 est articulé, et des palonniers 26 moyennant lesquels la rampe 4 est articulée sur le flotteur 3 correspondant.

Les figures 20A à 20G représentent la cinématique de déploiement des deux caissons 2 d'un véhicule de l'invention. Rappelons que les deux ensembles caisson/flotteurs/rampes constituent, en continuité avec la partie centrale de la caisse 1, la voie de roulement du véhicule. Les caissons 2 sont les parties intérieures de ces deux ensembles et sont toujours déployés lors de la mise en oeuvre d'un bac ou d'un pont. Les caissons 2 sont articulés sur la caisse 1 par l'intermédiaire de dispositifs de mise en oeuvre centraux dont trois sont attribués au caisson inférieur 2I et quatre au caisson supérieur 2S.

Chacun de ces dispositifs comporte, déjà exposé en référence à la figure 14, un vérin 21 ou 22 intégrée dans la structure de la caisse 1, un palonnier 19 ou 20 décrivant le pivotement respectivement du caisson supérieur ou du caisson inférieur et des biellettes 23 ou 24 permettant le lien entre le palonnier 19 ou 20 et la structure du caisson correspondant 2S ou 2I.

Les étapes de déploiement représentées sur la suite de figures 20A à 20G sont les suivantes :

| | |
|---|---|
| Figure 20A | Position repliée des deux caissons |
| Figure 20B | Pivotement du caisson supérieur |
| Figure 20C | Caisson supérieur à 90° |
| Figure 20D | Début du déploiement du caisson inférieur |
| Figure 20E | Caisson inférieur à 90° et caisson supérieur entièrement déployé |
| Figure 20F | Caisson supérieur entièrement déployé et caisson inférieur presque entièrement déployé |
| Figure 20G | Position déployée des deux caissons |

Les figures 21A à 21D représentent un caisson 2 et deux flotteurs 3, ainsi que quatre vérins 17 à l'aide desquels les flotteurs 3 sont déployés et repliés. Les flotteurs 3 sont reliés au caisson 2 par des axes débrayables 30, 31 disposés respectivement suivant l'axe de pivotement A ou l'axe de pivotement B.

La figure 21B représente, en détail de la figure 21A, les articulations entre le caisson 2 et chacun des flotteurs 3. Les charnières de flotteurs reliant le flotteur au caisson sont réalisées par des éléments amovibles afin de permettre un indexage de la charnière supérieure, pour réaliser la fonction de relevage de chacun des flotteurs 3 avec la rampe 4 associée. Le pivotement du flotteur 3 par rapport au caisson 2 est effectué moyennant le vérin 17 articulé respectivement à son extrémité 27 sur le caisson 2 et à son extrémité opposée 28 sur le flotteur 3. Une première articulation entre le caisson 2 et le flotteur 3, l'articulation inférieure, est déterminée par un premier axe débrayable 30 disposé suivant l'axe de pivotement A. Cette articulation est destinée au déploiement et reploiement du flotteur 3.

Une seconde articulation entre le caisson 2 et le flotteur 3, l'articulation supérieure, est déterminée par un second axe débrayable 31 disposé suivant l'axe de pivotement B. Cette articulation est destinée à un pivotement limité entre le flotteur 3 et le caisson 2 lorsque le flotteur 3 est entièrement déployé et lorsqu'il s'agit alors de donner une inclinaison au flotteur 3 et à la rampe 4 afin d'amener le bout de la rampe à hauteur de la berge d'embarquement ou de débarquement.

Le débrayage de la charnière suivant l'axe A s'effectue par désengagement des axes constituant le pivot. Ce désengagement est effectué par un mécanisme automatisé d'axe coulissant activé par un vérin de faible course. Une fois le désengagement du pivot A et l'engagement du pivot B effectué, le vérin 17 ne pilote plus le déploiement du flotteur 3 mais l'inclinaison de l'ensemble flotteurs 3/rampe 4.

En résumé, lorsque l'axe 30 est débrayé et l'axe 31 embrayé, le vérin 17 actionne le déploiement du flotteur 3. Lorsque, par contre, l'axe 30 est embrayé et l'axe 31 débrayé, le vérin 17 actionne l'inclinaison de l'ensemble flotteurs 3/rampe 4.

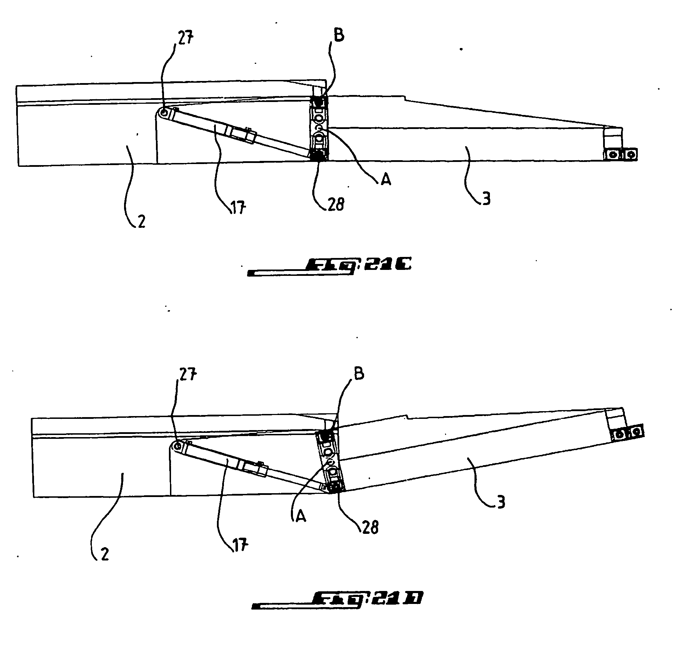

Les figures 21C et 21 D représentent le pivotement du flotteur 3 par rapport au caisson 2 en des vues latérales. Ainsi la figure 21 C représente le flotteur 3 en position entièrement déployée par rapport au caisson et son inclinaison par rapport à celui-ci. Contrairement à cela, la figure 21D représente le flotteur 3 en inclinaison par rapport au caisson 2.

Les figures 22A à 22D représentent en quatre étapes le déploiement des rampes 4 par rapport aux flotteurs 3. Chacune des rampes 4 est articulée sur un flotteur correspondant 3 et est actionné en déploiement et en reploiement moyennant un vérin 18.

L'articulation de la rampe 4 sur le flotteur 3 est réalisée par une biellette 25 sur laquelle est articulée un vérin 18 et qui, elle-même, est articulé respectivement par un axe 34 sur la rampe 4 et par un axe 35 sur le flotteur 3. Le vérin 18 est articulé sur la biellette 25 à un pivot 33. L'axe de pivotement effectif de la rampe 4 par rapport au flotteur 3 est référencé sur les figures 22A à 22D en 36.

Ainsi, les quatre étapes représentées sur les figures 22A à 22D sont :

| | |
|---|---|
| Figure 22A | Rampe 4 en état replié sur le flotteur 3 |
| Figure 22B | La rampe 4 est représentée en deux positions successives de déploiement, respectivement à moins de et à plus de 90° par rapport au flotteur 3 |
| Figure 22C | La rampe 4 est représentée en de 90° par rapport au flotteur 3 et en déploiement entier |
| Figure 22D | La rampe 4 est représentée en état entièrement déployé par rapport au flotteur 3 |

On notera accessoirement que les deux rampes adjacentes articulées sur deux flotteurs du même côté du véhicule ne sont pas nécessairement déployées ni repliées simultanément, c'est-à-dire leurs positions intermédiaires momentanées entre les états extrèmes qui sont l'état entièrement déployé et l'état entièrement replié, ne sont pas nécessairement identiques. Leur décalage peut être, par exemple, celui représenté sur les figures 22B et 22C, lorsque l'on observe les deux flotteurs et leurs rampes dans l'axe de pivotement.

En position repliée, comme en position déployée, la rampe 4 est verrouillée par rapport au flotteur 3 par des mécanismes pilotés depuis la cabine 5 du véhicule de l'invention. Les mécanismes comprennent essentiellement des vérins de faible course et des verrous de type marteau ou crochet.

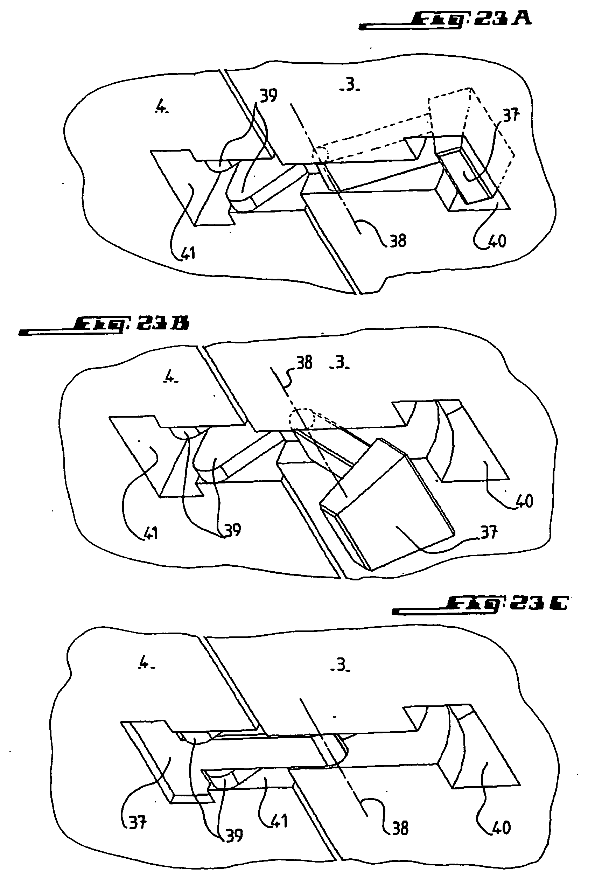

Ainsi, les figures 23A à 23C représentent un verrou de type « marteau » destiné à verrouiller la rampe 4 en position déployée. Le verrou de type marteau comprend donc, comme son nom l'indique, une partie mobile 37 en forme de marteau dont l'extrémité libre du manche du marteau est montée pivotant autour d'un axe 38 disposé parallèlement au bord de rattachement du flotteur 3 situé en regard du bord correspondant de la rampe 4. En outre, la rampe 4 est pourvue d'un logement dans lequel est disposé un élément de retenu 39 en forme d'une fourche à deux branches destinées à recevoir la tête du verrou pivotant 37.

Ainsi, comme le montre la figure 23A, en état non déployé et non verrouillé de la rampe 4, le verrou 37 est maintenu dans un logement 40 du flotteur 3.

Lorsque la rampe 4 est déployée entièrement, le verrou pivotant 37 est sorti de son logement 40, comme le montre la figure 23B et est pivotée vers la rampe 4. A la fin de son pivotement, le verrou pivotant 37 est situé dans un logement 41 de la rampe 4 et engagé dans la fourche 39.

En préparation d'un reploiement de la rampe 4 sur le flotteur 3, le verrouillage de la rampe 4 sur le flotteur 7 est ouvert en faisant pivoter le verrou pivotant 37 dans son logement initial 40 pratiqué dans le flotteur 3.

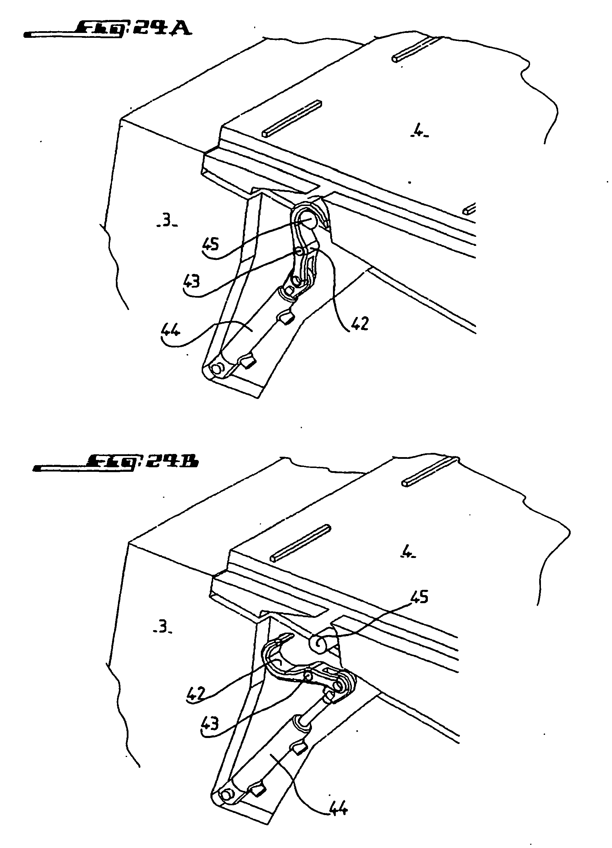

En position repliée, la rampe 4 est verrouillée sur le flotteur 3 moyennant un verrou type crochet qui comprend les éléments suivants : un crochet 42 monté pivotant autour d'un axe 43 du flotteur 3 et actionné par un vérin 44 de manière à s'engager sur un plot 45 solidaire de la rampe 4 ou de se dégager de celui-ci. Lorsque le verrou est actionné pour verrouiller ou déverrouiller la rampe, le crochet 42 est pivoté par le vérin 44 monté pivotant sur le flotteur 3. La figure 24A représente le crochet 42 engagé sur le plot 45, la rampe 4 étant alors verrouillée sur le flotteur 3 en état replié. Contrairement à cela, la figure 24B représente le crochet 42 dégagé du plot 45, la rampe 4 n'étant donc plus verrouillée sur le flotteur 3, elle peut donc être déployée.

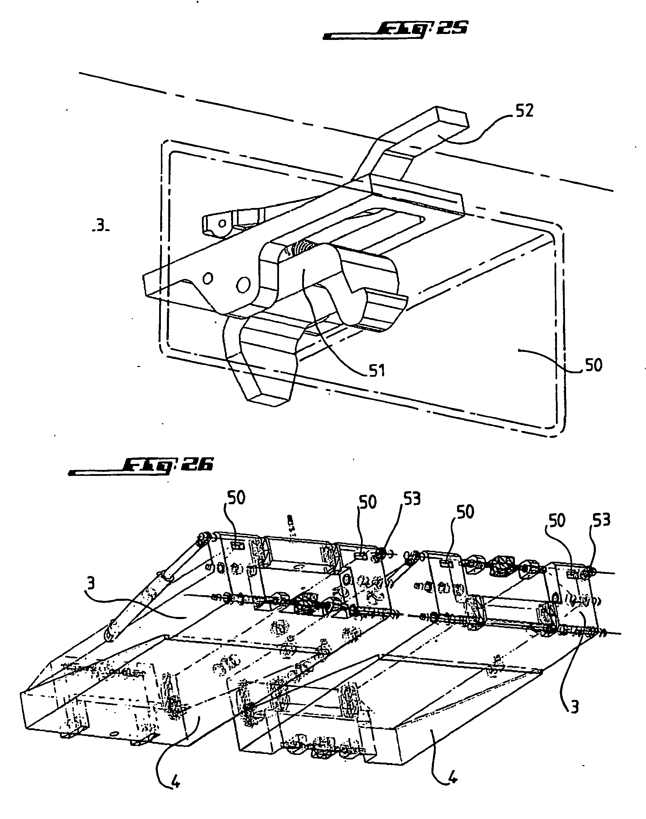

Les figures 25 à 28 représentent des moyens de verrouillage permettant de verrouiller deux véhicules l'un à l'autre par leurs flotteurs, c'est-à-dire lorsque les éléments déployables de deux véhicules sont déployés en déploiement demi-court. Les moyens de verrouillage comportent une partie mâle et une partie femelle montés sur les faces des flotteurs destinées à venir en contact avec les faces correspondantes des flotteurs d'un autre véhicule selon l'invention.

La partie femelle, représentée sur la figure 25, comprend, logés dans un logement 50 formé dans l'interface du flotteur 3, un crochet basculant 51 conformé pour être basculé par la partie mâle, lors de l'introduction de celle-ci dans le logement 50, dans la position représentée sur la figure 25 et pour être basculé, à l'aide d'un levier commandé 52, dans une position de dégagement libérant la partie mâle.

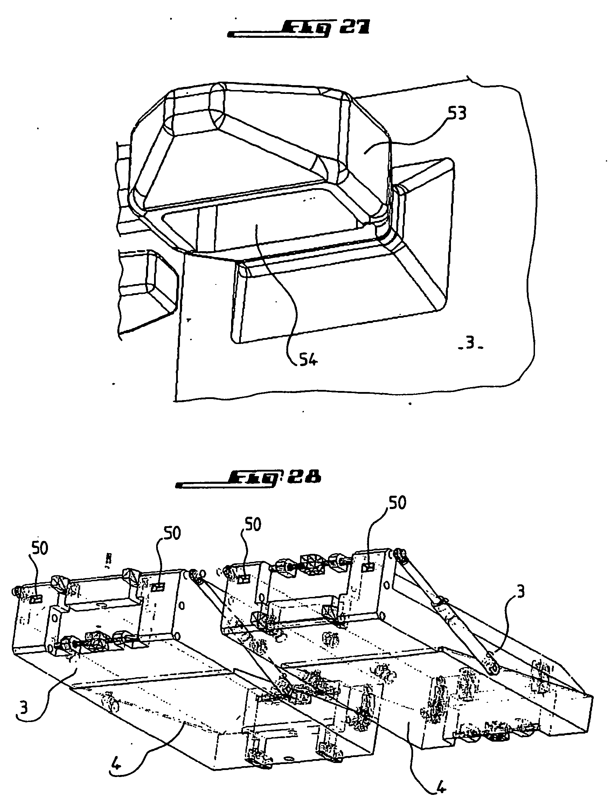

La partie mâle, représentée sur la figure 27, comprend, montés en saillie sur l'interface du flotteur 3, une tête 53 de forme générale épipédique à pointe pyramidale et pourvue d'une ouverture 54 dans laquelle le crochet basculant 51 s'engage pour verrouiller la partie mâle dans le logement 50 et de verrouiller ainsi le flotteur porteur de la partie mâle avec le flotteur pourvu du logement 50.

Les figures 26 et 28 représentent deux flotteurs d'un véhicule selon l'invention vus du côté des charnières les reliant au caisson du véhicule, et avec leurs rampes repliées. Alors que les interfaces des deux flotteurs 3 représentés sur la figure 26 sont munies de parties mâles et de parties femelles de verrouillage, les interfaces des flotteurs représentés sur la figure 28 ne sont munies que de parties femelles de verrouillage.

## Revendications

1. Véhicule amphibie comportant des éléments tels des caissons (2), des flotteurs (3) et des rampes (4) rangés les uns sur les autres sur une base roulante, automoteur (1) lorsque le véhicule est dans une configuration repliée pour déplacement sur la terre ferme et conformés pour pouvoir être déployés transversalement par rapport à un axe longitudinal (A) de la base roulante (1) lorsque le véhicule doit former, seul ou avec un autre véhicule de même conception, un pont flottant ou un bac permettant de franchir une brèche humide, et comprenant un dispositif de déploiement conformé pour commencer à déployer les éléments d'un côté avant de commencer à déployer les éléments de l'autre côté de la base roulante (1) suivant au moins trois configurations différentes, les éléments (2 à 4) de chaque côté comportant respectivement, de l'intérieur vers l'extérieur en configuration déployée, un caisson (2), un flotteur (3) et une rampe (4) articulés entre eux en Z,
**caractérisé en ce qu'**il est conformé pour que lorsque, en une première configuration de déploiement, les éléments (2 à 4) de chaque côté sont déployés de façon minimale, chacun des flotteurs (3) et rampes (4) soit situé en dessous du caisson (2) correspondant déployé.

2. Véhicule amphibie selon la revendication 1, **caractérisé en ce qu'**il comprend des éléments de verrouillage (50, 53) permettant de verrouiller entre eux au moins deux véhicules pour réaliser un pont ou un bac, sur les caissons (2) et sur les flotteurs (3).

3. Véhicule amphibie selon la revendication 2, **caractérisé en ce que** les éléments de verrouillage (50, 53) sont disposés sur chaque interface de caisson (2) et de flotteur (3) de manière symétrique pour pouvoir réaliser tout type de connexion entre deux véhicules.

4. Véhicule amphibie selon la revendication 2 ou 3, **caractérisé en ce que** les éléments de verrouillage (50, 53) comportent sur chaque interface de caisson (2) et de flotteur (3) des verrous mâles (53) et des verrous femelles (50).

5. véhicule amphibie selon l'une quelconque des revendications 1 à 4, **caractérisé en ce que** chaque ensemble flotteur-rampe (3, 4) comporte des charnières débrayables (30, 31) permettant, selon l'embrayage / débrayage effectué, qu'un même vérin (17) pilote respectivement le déploiement ou l'inclinaison de l'ensemble flotteur-rampe (3, 4) correspondant.

## Patentansprüche

1. Amphibienfahrzeug, das Elemente wie Kammern (2), Schwimmer (3) und Rampen (4) aufweist, die übereinander auf einer rollenden Basis angeordnet sind, die selbstfahrend (1) ist, wenn das Fahrzeug in einer zusammengeklappten Konfiguration zur Verlagerung auf festem Boden ist und ausgebildet, um im Verhältnis zu einer Längsachse (A) der rollenden Basis (1) quer aufgeklappt zu sein, wenn das Fahrzeug allein oder mit einem anderen gleich konzipierten Fahrzeug eine schwimmende Brücke oder eine Fähre bilden muss, die es erlaubt, eine wassergefüllte Kluft zu überwinden, und eine Klappvorrichtung umfasst, die ausgebildet ist, um zu beginnen, die Elemente auf einer Seite aufzuklappen, bevor begonnen wird, die Elemente auf der anderen Seite der rollenden Basis (1) in mindestens drei verschiedenen Konfigurationen aufzuklappen, wobei die Elemente (2 bis 4) jeder Seite jeweils von innen nach außen in aufgeklappter Konfiguration eine Kammer (2), einen Schwimmer (3) und eine Rampe (4) aufweisen, die untereinander Z-förmig angelenkt sind, **dadurch gekennzeichnet, dass** es ausgebildet ist, damit, wenn in einer ersten aufgeklappten Konfiguration die Elemente (2 bis 4) auf jeder Seite minimal aufgeklappt sind, sich jeder der Schwimmer (3) und Rampen (4) unter der entsprechenden aufgeklappten Kammer (2) befindet.

2. Amphibienfahrzeug nach Anspruch 1, **dadurch gekennzeichnet, dass** es Verriegelungselemente (50, 53) umfasst, die es erlauben, mindestens zwei Fahrzeuge miteinander zu verriegeln, um auf den Kammern (2) und auf den Schwimmern (3) eine Brücke oder eine Fähre herzustellen.

3. Amphibienfahrzeug nach Anspruch 2, **dadurch gekennzeichnet, dass** die Verriegelungselemente (50, 53) auf jeder Kammer- und Schwimmerschnittstelle (2, 3) symmetrisch angeordnet sind, um jede Art von Verbindung zwischen zwei Fahrzeugen herstellen zu können.

4. Amphibienfahrzeug nach Anspruch 2 oder 3, **dadurch gekennzeichnet, dass** die Verriegelungselemente (50, 53) auf jeder Kammer- und Schwimmerschnittstelle (2, 3) männliche Riegel (53) und weibliche Riegel (50) aufweisen.

5. Amphibienfahrzeug nach einem der Ansprüche 1 bis 4, **dadurch gekennzeichnet, dass** jede Schwimmer-Rampe-Gruppe (3, 4) auskoppelbare Scharniere (30, 31) aufweist, die je nach durchgeführter Kopplung / Auskopplung erlauben, dass ein selber Zylinder (17) jeweils das Aufklappen oder die Neigung der entsprechenden Schwimmer-Rampe-Gruppe (3, 4) steuert.

## Claims

1. An amphibious vehicle including elements such as buoyancy tanks (2), floats (3) and ramps (4) arranged on each other on a self-propelled rolling base (1) when the vehicle is in a folded configuration for land movement and configured to be able to be deployed transversely relative to the longitudinal axis (A) of the rolling base (1) when the vehicle must form, alone or with another vehicle of the same design, a floating bridge or a tub making it possible to breach a water-filled opening, and comprising a deployment device configured to begin to deploy the elements on one side before beginning to deploy the elements on the other side of the rolling base (1) according to at least three different configurations, the elements (2 to 4) on each side respectively having, from the inside toward the outside in the deployed configuration, a buoyancy tank (2), a float (3) and a ramp (4) articulated in a Z, **characterized in that** it is configured so that when, in a first deployment configuration, the elements (2 to 4) on each side are deployed minimally, each of the floats (3) and ramps (4) is situated below the corresponding deployed buoyancy tank (2).

2. The amphibious vehicle according to claim 1, **characterized in that** it comprises locking elements (50, 53) making it possible to lock at least two vehicles to each other to form a bridge or tub, on the buoyancy tanks (2) and on the floats (3).

3. The amphibious vehicle according to claim 2, **characterized in that** the,locking elements (50, 53) are positioned symmetrically on each buoyancy tank (2) and float (3) interface to be able to form any type of connection between two vehicles.

4. The amphibious vehicle according to claim 2 or 3, **characterized in that** the locking elements (50, 53) include, on each buoyancy tank (2) and float (3) interface, male locks (53) and female locks (50).

5. The amphibious vehicle according to any one of claims 1 to 4, **characterized in that** each float-ramp assembly (3, 4) includes disconnectable hinges (30, 31), making it possible, depending on the connection/disconnection done, for a same cylinder (17) to respectively control the deployment and incline of the corresponding float-ramp assembly (3, 4).
